(19) Europäisches Patentamt

European Patent Office

Office européen des brevets

(11) **EP 0 723 090 A2**

(12) **EUROPÄISCHE PATENTANMELDUNG**

(43) Veröffentlichungstag:
24.07.1996 Patentblatt 1996/30

(51) Int. Cl.⁶: **F16F 9/44**

(21) Anmeldenummer: 95120381.9

(22) Anmeldetag: 22.12.1995

(84) Benannte Vertragsstaaten:
BE DE FR IT NL

(30) Priorität: 19.01.1995 DE 19501490

(71) Anmelder: Hunger, Walter, Dr.-Ing.
D-97074 Würzburg (DE)

(72) Erfinder: Hunger, Walter, Dr.-Ing.
D-97074 Würzburg (DE)

(74) Vertreter: Witte, Alexander, Dr.-Ing. et al
Witte, Weller, Gahlert, Otten & Steil,
Patentanwälte,
Rotebühlstrasse 121
D-70178 Stuttgart (DE)

(54) **Hydropneumatisches Federbein, insbesondere für eine Gabel eines Fahrrades**

(57) Ein hydropneumatisches Federbein umfaßt eine erste, hydraulische Baugruppe, in der ein Hydraulikmedium bei einem Arbeitsspiel des Federbeins (20) zwischen einem ersten Raum (41) und einem zweiten Raum (86) in Abhängigkeit von einer Dämpfungskonstante der ersten Baugruppe verdrängt wird, und mit einer zweiten, pneumatischen Baugruppe, in der ein Gas bei einem Arbeitsspiel des Federbeins (20) in einem dritten Raum (87) in Abhängigkeit von einer Federkonstante der zweiten Baugruppe komprimiert bzw. entspannt wird, dadurch gekennzeichnet, daß am Federbein (20) manuell betätigbare Einstellmittel zum Verändern mindestens einer der Konstanten vorgesehen sind.

Fig. 2B

EP 0 723 090 A2

# Beschreibung

Die Erfindung betrifft ein hydropneumatisches Federbein mit einer ersten, hydraulischen Baugruppe, in der ein Hydraulikmedium bei einem Arbeitsspiel des Federbeins zwischen einem ersten Raum und einem zweiten Raum in Abhängigkeit von einer Dämpfungskonstante der ersten Baugruppe verdrängt wird, und mit einer zweiten, pneumatischen Baugruppe, in der ein unter einem vorbestimmten Druck stehendes Gas bei einem Arbeitsspiel des Federbeins in einem dritten Raum in Abhängigkeit von einer Federkonstante der zweiten Baugruppe komprimiert bzw. entspannt wird.

Die Erfindung betrifft insbesondere ein derartiges hydropneumatisches Federbein, das in einem Fahrrad, insbesondere in einer Gabel eines Fahrrades, verwendet wird.

Es ist bekannt, bei Fahrzeugen hydropneumatische Federbeine einzusetzen. Bei derartigen Federbeinen wird durch eine hydraulische Baugruppe eine Dämpfung und durch eine pneumatische Baugruppe eine Federung des Fahrzeuges bewirkt. Hydropneumatische Federungen sind vor allem im Kraftfahrzeugbau bekannt geworden.

Im Zuge der zunehmenden Technisierung von Fahrrädern sind auch bei Fahrrädern aufwendige Feder- und Dämpfungselemente eingesetzt worden. Die bekanntesten dabei verwendeten Elemente sind Schraubenfedern, Luftfedern und Elastomerfedern.

Die bekannten Feder- und Dämpfungsvorrichtungen für Fahrräder haben den Nachteil, daß sie nicht oder nur sehr unzulänglich auf die individuellen Wünsche und Bedürfnisse des Fahrers einstellbar sind. So muß ein Käufer eines Fahrrades, der im Hinblick auf seine Körpergröße und sein Körpergewicht und gegebenenfalls auch im Hinblick auf die gewünschte Fahrweise spezielle Federungs- und Dämpfungseigenschaften des Fahrrades wünscht, sich ein Fahrrad "auf Maß" beschaffen. Dabei wird ein Fahrrad aus einer Vielzahl möglicher Komponenten individuell zusammengestellt, ist dann jedoch in seinen Eigenschaften nicht mehr veränderbar.

Der Erfindung liegt demgegenüber die Aufgabe zugrunde, ein Federbein der eingangs genannten Art dahingehend weiterzubilden, daß insbesondere bei einer Verwendung in einem Fahrrad eine Anpassung an die individuellen Wünsche des Fahrers möglich ist. Diese Einstellmöglichkeit soll vor Fahrantritt bestehen, unter Umständen jedoch auch während der Fahrt vorhanden sein, ohne absteigen zu müssen. Insbesondere soll es nicht erforderlich sein, für die Verstellung der Einstellung spezielles Werkzeug einsetzen zu müssen.

Diese Aufgabe wird erfindungsgemäß dadurch gelöst, daß am Federbein manuell betätigbare Einstellmittel zum Verändern mindestens einer der Konstanten vorgesehen sind.

Die der Erfindung zugrunde liegende Aufgabe wird auf diese Weise vollkommen gelöst.

Wenn nämlich erfindungsgemäß die Möglichkeit besteht, das Federbein durch unmittelbar am Federbein angeordnete Einstellmittel in den beiden Konstanten zu verändern, so kann sowohl das Dämpfungsverhalten wie auch das Federungsverhalten individuell so eingestellt werden, wie es den Gegebenheiten und Wünschen auf seiten des Fahrers entspricht. Durch die manuelle Betätigbarkeit ist eine einfache Verstellmöglichkeit gegeben, da es keiner aufwendigen Werkzeuge, Verstelleinrichtungen oder dergleichen bedarf. Die Anordnung der Einstellmittel am Federbein selbst hat darüber hinaus den Vorteil, daß unter Umständen sogar während der Fahrt eine Verstellung der Konstanten vorgenommen werden kann. Auf diese Weise ist es besonders gut möglich, die jeweils optimalen Werte der Konstanten für die Dämpfung und die Federung zu finden.

Bei einer bevorzugten Ausgestaltung der Erfindung sind die Einstellmittel um eine Längsachse verdrehbar.

Diese Maßnahme hat den Vorteil, daß eine besonders einfache manuelle Betätigung möglich ist, weil lediglich ein entsprechender Knopf oder Ring verdreht werden muß, um die Konstanten zu verändern.

Besonders bevorzugt ist ferner, wenn die Einstellmittel sich an einem axialen Ende des Federbeins befinden.

Diese Maßnahme hat den Vorteil, daß sich eine besonders einfache konstruktive Lösung ergibt, da die beiden Konstanten mit Einstellmitteln verstellt werden können, die sich an jeweils einem freien Ende des Federbeins befinden. Komplizierte Durchführungen und dergleichen sind daher nicht erforderlich.

Bei bevorzugten Ausführungsbeispielen der Erfindung betätigen die Einstellmittel zum Verändern der Dämpfungskonstante eine einstellbare Drossel.

Diese Maßnahme hat den Vorteil, daß die Dämpfungskonstante in weiten Bereichen und mit sehr einfachem Bewegungsablauf eingestellt werden kann.

Bei diesem Ausführungsbeispiel ist besonders bevorzugt, wenn die Drossel Kanäle in einem zwischen dem ersten Raum und dem zweiten Raum angeordneten Hydraulik-Arbeitskolben umfaßt, die mittels einer Blende überdeckbar sind.

Diese Maßnahme hat den Vorteil, daß die Drosselfunktion mit sehr wenigen und mechanisch einfach darstellbaren Elementen realisiert werden kann.

In bevorzugter Weiterbildung dieses Ausführungsbeispiels ist die Blende axial fest auf dem Hydraulik-Arbeitskolben angeordnet und mittels eines axialen, drehstarren und teleskopartig ausgebildeten Gestänges betätigbar.

Diese Maßnahme hat den Vorteil, daß auch bei vollem Durchmessen des Arbeitsspieles des Federbeins die einfache Betätigbarkeit der Blende gewährleistet ist.

Bei einer weiteren Gruppe von Ausführungsbeispielen betätigen die Einstellmittel zum Verändern der Dämpfungskonstante vorzugsweise zugleich einen Endanschlag zum Begrenzen des Hubes eines zwischen dem ersten Raum und dem zweiten Raum angeordneten Hydraulik-Arbeitskolbens.

Diese Maßnahme hat den Vorteil, daß eine dritte Einstellmöglichkeit gegeben ist, die von der Fuhktion her mit der Einstellbarkeit der Dämpfungskonstante vereinigt ist. Durch die zusätzliche Einstellmöglichkeit für den Hub des Federbeins läßt sich eine weitere optimale Anpassung an den Fahrer bzw. die Fahrweise vornehmen.

In bevorzugter Weiterbildung dieses Ausführungsbeispiels ist der Endanschlag mittels einer vom Gestänge verdrehbaren Spindel verstellbar.

Diese Maßnahme hat den Vorteil, daß eine einfache und mechanisch sehr stabile Einstellung für den Endanschlag gegeben ist.

Bei weiteren Ausführungsbeispielen der Erfindung betätigen die Einstellmittel zum Verändern der Federkonstante einen den dritten Raum einseitig begrenzenden, einstellbaren Kolben.

Diese Maßnahme hat den Vorteil, daß durch eine gezielte Veränderung des Volumens des Gasraumes und damit des Ausgangs-Arbeitsdrucks eine Verschiebung der Federkennlinie erreicht werden kann, so daß die Federkennlinie in Abhängigkeit vom Federweg anfänglich mehr oder weniger progressiv eingestellt werden kann.

Bevorzugt ist bei diesem Ausführungsbeispiel, wenn die Einstellmittel zum Verändern der Federkonstante eine Überwurfmutter umfassen, die auf einem den dritten Raum umschließenden Rohr läuft und mit einer radialen Mitnahme für den einstellbaren Kolben versehen ist.

Diese Maßnahme hat den Vorteil, daß die Einstellmöglichkeit für die Federkonstante besonders einfach realisiert ist und auch bei hohem Arbeitsdruck nur eine geringe Betätigungskraft aufgewendet zu werden braucht. Darüber hinaus kann das Einstellmittel auf diese Weise unter Umständen sogar während der Fahrt verstellt werden.

Bei konstruktiven Ausführungsbeispielen des erfindungsgemäßen Federbeins ist bevorzugt, wenn das Federbein umfaßt:

- ein oberes Kopfteil;
- ein an einem freien Ende mit dem oberen Kopfteil starr verbundenes Innenrohr;
- einen das andere freie Ende des Innenrohres abschließenden pneumatischen Arbeitskolben;
- ein unteres Kopfteil;
- ein an einem freien Ende mit dem unteren Kopfteil starr verbundenes Außenrohr, dessen anderes freies Ende druckdicht auf dem anderen freien Ende des Innenrohres läuft;
- eine starr mit dem unteren Kopfteil verbundene erste Stange, wobei die erste Stange das äußere Rohr axial durchsetzt und mit seinem freien Ende den pneumatischen Arbeitskolben axial durchdringt; und

- einen hydraulischen Arbeitskolben, der - freien Ende der ersten Stange starr befestigt ist, wobei der hydraulische Arbeitskolben mindestens einen weiten axialen Kanal, mindestens einen engen axialen Kanal sowie Rückschlagventilmittel für mindestens einen der Kanäle umfaßt.

Diese Maßnahmen haben den Vorteil, daß ein konstruktiv einfacher, leicht montierbarer und in der Fertigung preiswert herstellbarer Aufbau entsteht.

Eine Weiterbildung dieses Ausführungsbeispiel zeichnet sich aus durch:

- einen auf der Stange zwischen dem unteren Kopfteil und dem pneumatischen Arbeitskolben geführten Einstellkolben, der druckdicht im Außenrohr läuft; und
- eine auf einem Außengewinde des Außenrohres laufende Überwurfmutter, die über eine radiale Mitnahme mit dem Einstellkolben verbunden ist.

Ferner sind bevorzugt:

- eine mit dem hydraulischen Arbeitskolben axial fest, jedoch drehbar verbundene Steuerscheibe mit einem Blendenabschnitt zum variablen Überdekken mindestens eines der Kanäle in Abhängigkeit vom Verdrehwinkel der Steuerscheibe; und
- eine mit der Steuerscheibe drehstarr verbundene zweite Stange, die drehstarr, jedoch axial verschiebbar mit einem Einstellmittel am oberen Kopfteil verbunden ist.

Dies gilt ferner für:

- ein mit dem Einstellmittel am oberen Kopfteil verbundenes Unrundprofil, das mit seinem freien Ende in ein komplementär ausgebildetes Gegenprofil der als Verstellhülse ausgebildeten zweiten Stange eingreift; und
- eine druckdichte Durchführung zwischen dem Einstellmittel am oberen Kopfteil und dem Unrundprofil.

Weiter bevorzugt sind:

- ein mit dem Einstellmittel am oberen Kopfteil verbundenes Anschlagteil für eine starre Verlängerung der ersten Stange; und
- eine über das Einstellmittel am oberen Kopfteil betätigbare Spindel zum axialen Verstellen des Anschlagteiles.

Bei einer weiteren Gruppe von Ausführungsbeispielen der Erfindung sind Mittel zum Einstellen des Arbeitsdruckes des Gases vorgesehen.

Diese Maßnahme hat den Vorteil, daß die Federeigenschaften zum Beispiel an das Körpergewicht des Fahrers angepaßt werden können. So ist von besonderem Vorteil, wenn bei hohem Körpergewicht der Arbeitsdruck des Gases entsprechend höher und bei niedrigem Körpergewicht der Arbeitsdruck entsprechend niedriger eingestellt werden kann.

Bei einer bevorzugten Weiterbildung dieser Variante umfassen die Mittel einen Anschluß für eine Fahrrad-Luftpumpe.

Diese Maßnahme hat den Vorteil, daß der Druck mit einfachen Bordmitteln durch den Fahrer selbst eingestellt werden kann.

Bei einer weiteren Gruppe von Ausführungsbeispielen der Erfindung, bei denen zwei Federbeine in einer Fahrradgabel verwendet werden, sind die dritten Räume der Federbeine mittels einer Druckluftleitung miteinander verbunden.

Diese Maßnahme hat den Vorteil, daß eine exakte Symmetrie zwischen den beiden Federbeinen der Fahrradgabel entsteht, weil in beiden Gasräumen der Gasdruck exakt gleich groß ist.

Bei weiteren Ausführungsbeispielen der Erfindung ist bevorzugt, wenn ein Manometer an den dritten Raum angeschlossen ist.

Diese Maßnahme hat den Vorteil, daß der Fahrer den Druck im Gasraum überwachen und notfalls korrigieren kann.

Bei einer Verwendung des Federbeins jeweils in einer Vorderrad- und einer Hinterradgabel ist ferner bevorzugt, wenn jeweils ein Manometer für jede Gabel vorgesehen ist.

Auch diese Maßnahme hat den Vorteil, daß der Fahrer, auch während der Fahrt, den Gasdruck kontrollieren kann, da das Manometer bzw. die Manometer im Blickfeld des Fahrers angeordnet sind.

Weitere Vorteile ergeben sich aus der Beschreibung und der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1 eine Vorderansicht auf eine Fahrradgabel, in der zwei erfindungsgemäße Federbeine eingebaut sind;

Figuren 2A, 2B und 2C detaillierte Ansichten, im Längsschnitt, von Abschnitten A, B und C in Richtung der Pfeile II-II von Fig. 1;

Figuren 3 und 4 Radialschnitte, in vergrößertem Maßstab, entlang der Linien III-III bzw. IV-IV von Fig. 2B;

Fig. 5 ein Federdiagramm zur Erläuterung des Ausführungsbeispiels gemäß Fig. 2A bis 2C.

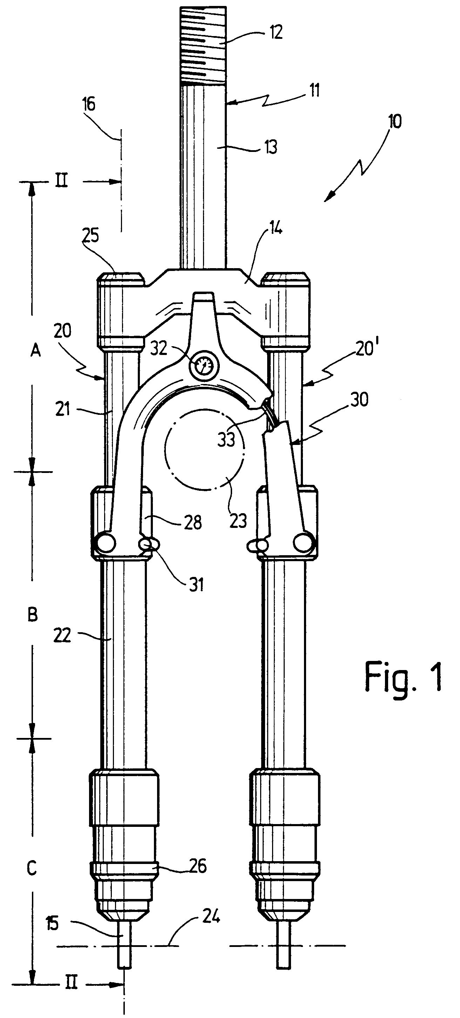

In Fig. 1 bezeichnet 10 insgesamt eine Fahrradgabel, wie sie für technisch hochwertige Fahrräder, insbesondere sogenannte Mountain-Bikes, eingesetzt werden kann. Die teilweise nur schematisch angedeutete Fahrradgabel 10 umfaßt an ihrem oberen Ende eine Befestigungsstange 11. Die Befestigungsstange 11 ist am oberen freien Ende mit einem Gewindeabschnitt 12 versehen, an den ein Lenker und dergleichen angeschraubt werden kann. Eine untere Verlängerung 13 der Befestigungsstange 11 dient zur Verbindung mit einem im übrigen nicht dargestellten Rahmen des Fahrrades.

Die Fahrradgabel 10 kann prinzipiell als Vorderradgabel oder als Hinterradgabel verwendet werden.

Die Verlängerung 13 läuft unten in eine Querstrebe 14 aus. Am unteren Ende der Fahrradgabel 10 sind Befestigungsflansche 15 für zum Beispiel ein Vorderrad des Fahrrades zu erkennen.

Mit 16 ist die Längsachse von vorzugsweise baugleichen Federbeinen 20, 20' dargestellt, die die Querstrebe 14 mit jeweils einem der Befestigungsflansche 15 verbinden. Für ein Mountain-Bike werden vorzugsweise vier gleiche Federbeine verwendet, nämlich jeweils zwei für die Vorderrad- und die Hinterradgabel. Die Federbeine 20, 20' weisen jeweils ein oberes Rohr 21 und ein unteres Rohr 22 auf. Die Federbeine 20, 20' schließen zwischen sich ein Rad 23 ein, das in Fig. 1 nur schematisch strichpunktiert angedeutet ist. Die Radachse ist mit 24 bezeichnet.

Am oberen Ende der Federbeine 20, 20' sind erste Einstellmittel 25 und am unteren Ende zweite Einstellmittel 26 zu erkennen, deren Funktion weiter unten noch ausführlich erläutert werden wird.

Die unteren Rohre 22 der beiden Federbeine 20, 20' sind über einen starren Bügel 30 miteinander verbunden. Der Bügel 30 ist von U-förmiger Gestalt. An seinen freien Enden sind Befestigungselemente 31 für eine Radbremse zu erkennen. Am oberen Ende des Bügels 30 befindet sich ein Anschlußstutzen (nicht dargestellt) sowie ein Manometer 32 für eine Druckluftleitung 33, die vom Anschlußstutzen 32 zu den beiden unteren Rohren 22 führt. Es können auch zwei Manometer, jeweils eines für die Vorderrad- und die Hinterradgabel vorgesehen sein, die dann vom Fahrer bequem abgelesen werden können. Die Funktion dieser Elemente wird ebenfalls weiter unten noch ausführlich erläutert werden.

Die Federbeine 20, 20' arbeiten hydropneumatisch. Beim Einfedern der Federbeine 20, 20' läuft das untere Rohr 22 über das obere Rohr 21, so daß der Bügel 30 in der Darstellung von Fig. 1 sich nach oben in Richtung auf die Querstrebe 14 zu bewegt. Das Arbeitsspiel der Federbeine 20, 20' ist dabei sowohl gedämpft wie auch gefedert, wobei die Dämpfung durch eine hydraulische Baugruppe und die Federung durch eine pneumatische Baugruppe bewirkt wird.

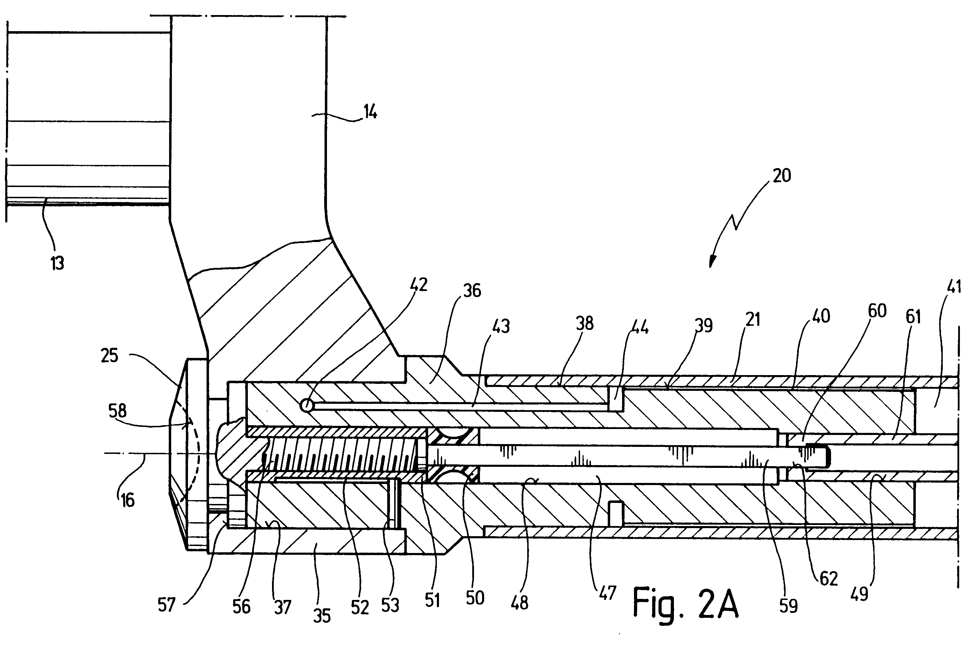

Dies soll nachstehend anhand der Figuren 2A bis 2C im einzelnen erläutert werden:

In Fig. 2A erkennt man in stark vergrößertem Maßstab auf der linken Seite die Verlängerung 13 der Befestigungsstange 11 sowie die Querstrebe 14, die in der Darstellung der Fig. 2A nach unten zum Federbein 20 führt.

Hierzu läuft die Querstrebe 14 in einen Halteabschnitt 35 aus, der konzentrisch zur Längsachse 16 ein oberes Kopfteil 36 des Federbeins 20 umschließt und dabei axial sowie in Drehrichtung fixiert. Hierzu ist eine Aufnahmebohrung 37 im Halteabschnitt 35 vorgesehen, die einen in Fig. 2A linken Abschnitt des oberen Kopfteils 36 aufnimmt. Der Halteabschnitt 35 ist dabei zum Beispiel axial geschlitzt, so daß der erwähnte Abschnitt des oberen Kopfteils 36 mittels einer den Schlitz durchsetzenden Schraube zangenartig festgeklemmt werden kann.

An dem in Fig. 2A rechten Abschnitt des oberen Kopfteils 36 erkennt man einen ersten Abschnitt 38 größeren Durchmessers sowie einen zweiten Abschnitt 39 kleineren Durchmessers. Auf den ersten Abschnitt 38 ist das obere Rohr 21 aufgeschoben und fixiert. Demzufolge bildet sich um den zweiten Abschnitt 39 kleineren Durchmessers herum ein Ringkanal 40 aus. Dieser Ringkanal 40 mündet auf der in Fig. 2A rechten Seite in einen ersten Ölraum 41 jenseits des in Fig. 2A rechten Endes des oberen Kopfteils 36.

In Fig. 2A ist mit 42 ein Ölanschluß angedeutet, der radial aus dem oberen Kopfteil 36, das heißt senkrecht zur Zeichenebene der Fig. 2A, herausgeführt ist und in einem geeigneten Anschlußstutzen mündet (nicht dargestellt). Der Ölanschluß 42 mündet am anderen Ende in einen Kanal 43, der seinerseits eine Ringnut 44 versorgt. Die Ringnut 44 wiederum schließt an den Ringkanal 40 an. Es versteht sich, daß auch mehrere Kanäle 43 und gegebenenfalls mehrere Ölanschlüsse 42 vorgesehen werden können, je nachdem, wie dies im Einzelfall zweckmäßig ist.

Das obere Kopfteil 36 ist ferner von einer in der Achse 16 verlaufenden Längsbohrung 47 durchsetzt. Die Längsbohrung 47 weist einen ersten Abschnitt 48 größeren Innendurchmessers sowie einen zweiten Abschnitt 49 kleineren Innendurchmessers auf. In dem in Fig. 2A linken Bereich des ersten Abschnittes 48 erkennt man ein elastisches Anschlagteil 50, das vorzugsweise aus einem Elastomer besteht. Das elastische Anschlagteil 50 sitzt frontal auf einer Gewindehülse 51. Die Gewindehülse 51 ist seitlich mit einer axialen Längsnut 52 versehen. In die Längsnut 52 taucht ein radialer Stift 53 ein, der im oberen Kopfteil 36 fixiert ist. Die Gewindehülse 51 kann sich damit axial verschieben, jedoch nicht drehen. Die Gewindehülse 51 läuft auf einem Gewindebolzen 56. Der

Gewindebolzen 56 ist an seinem in Fig. 2A linken Ende in einem Axiallager 57 gehalten, so daß er verdrehbar, aber axial nicht verschiebbar ist. Das Axiallager 57 kann darüber hinaus druckdicht ausgebildet sein.

Der Gewindebolzen 56 bildet ein Teil der als Drehknopf ausgebildeten ersten Einstellmittel 25. Zum Verdrehen des Drehknopfes 25 und damit des Gewindebolzens 56 ist die Oberfläche der ersten Einstellmittel 25 entsprechend ausgebildet, damit ein manuelles Verdrehen möglich ist. Bei dem in Fig. 2A dargestellten Ausführungsbeispiel ist zu diesem Zweck eine diametral verlaufende Kerbe 58 vorgesehen. Die Kerbe 58 ist so dimensioniert, daß der Drehknopf 25 zum Beispiel mit einer üblichen Münze verdreht werden können, die in die Kerbe 58 eingesteckt wird. Es versteht sich jedoch, daß auch zahlreiche andere Verstellmöglichkeiten einsetzbar sind, beispielsweise eine Rändelmutter und dergleichen mehr.

Der Gewindebolzen 56 geht an seinem in Fig. 2A rechten Ende in eine Verlängerung 59 über, die als Unrundprofil ausgebildet ist. Das Unrundprofil 59 taucht in ein freies Ende 60 einer Verstellhülse 61 ein, das mit einem komplementären Gegenprofil 62 versehen ist. Die Verstellhülse 61 läuft im zweiten Abschnitt 49 kleineren Durchmessers an dem in Fig. 2A rechten Ende des oberen Kopfteils 36. Damit ist die Anordnung so getroffen, daß das Unrundprofil 59 sich axial im freien Ende 60 der Verstellhülse 61 bewegen kann, die Verstellhülse 61 jedoch verdreht wird, wenn sich das Unrundprofil 59 dreht.

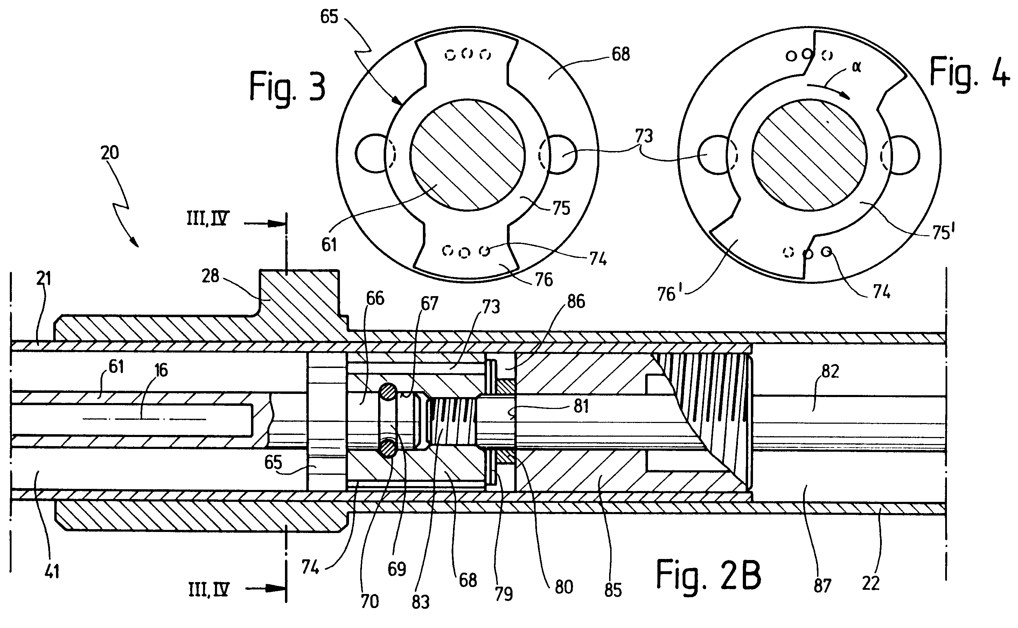

Wie man aus Fig. 2B erkennt, läuft die Verstellhülse 61 an ihrem in Fig. 2B rechten Ende in einer Steuerscheibe 65 aus, mit der sie starr verbunden ist. Die Steuerscheibe 65 ihrerseits ist auf der gegenüberliegenden Seite mit einem Fortsatz 66 versehen, der in eine Innenbohrung 67 eines hydraulischen Arbeitskolbens 68 faßt. Der Fortsatz 66 ist mit einer Ringnut 69 versehen. Zwei Sicherungsstifte 70 fixieren den Fortsatz 66 axial im hydraulischen Arbeitskolben 68, gestatten jedoch eine Verdrehung der Steuerscheibe 65 relativ zum hydraulischen Arbeitskolben 68.

Der hydraulische Arbeitskolben 68 ist mit ersten, weiten Kanälen 73 sowie mit zweiten, engen Kanälen 74 versehen, die in Fig. 2B der Übersichtlichkeit halber übereinander dargestellt sind.

Wie man jedoch aus den Figuren 3 und 4 erkennt, sind beim Ausführungsbeispiel zwei diametral gegenüberliegende erste Kanäle 73 vorgesehen. An einer um 90° demgegenüber versetzten Position befinden sich jeweils drei enge Kanäle 74, insgesamt also deren sechs.

Die Steuerscheibe 65, die auf der Verstellhülse 61 sitzt oder mit dieser einstückig ausgebildet ist, weist im achsnahen Bereich einen Ringabschnitt 75 sowie daran radial angesetzt zwei gleiche Blendenabschnitte 76 auf, die einander diametral gegenüber stehen.

In der in Fig. 3 dargestellten Position sind die sechs engen Kanäle 74 von den beiden Blendenabschnitten 76 vollständig überdeckt und damit verschlossen. Die weiten Kanäle 73 sind demgegenüber nahezu vollständig freigegeben.

Wird nun die Steuerscheibe 65 in Uhrzeigerrichtung um den in Fig. 4 eingezeichneten Winkel α verdreht, so entfernen sich die Blendenabschnitte 76 von den Mündungen der engen Kanäle 74 und geben diese nacheinander frei. Der Strömungsquerschnitt der weiten Kanäle 73 wird dadurch zunächst nicht beeinflußt. Erst bei weiterem Verdrehen der Steuerscheibe 65 werden die weiten Kanäle 73 an ihrer Ausmündung verschlossen, während dann die engen Kanäle 74 vollkommen freigegeben sind.

An der von der Steuerscheibe 65 abgewandten Stirnseite des hydraulischen Arbeitskolbens 68 ist ein Plattenventil 79 angeordnet, das für die weiten Kanäle 73 als Rückschlagventil wirkt und diese freigibt bzw. verschließt, wie dies weiter unten noch erläutert werden wird. Die engen Kanäle 74 werden beim dargestellten Ausführungsbeispiel vom Plattenventil 79 nicht beeinflußt.

Das Plattenventil 79 wird mittels eines Andruckringes 80 auf der Stirnseite des hydraulischen Arbeitskolbens 68 gehalten.

Hierzu ist eine Ringschulter 81 an einer Stange 82 vorgesehen, die mittels eines Gewindeabschnittes 83 durch das Plattenventil 79 hindurch und in die dort als Gewindebohrung ausgebildete Innenbohrung 67 des hydraulischen Arbeitskolbens 68 eingeschraubt ist. Es besteht somit eine axial starre Verbindung zwischen der Stange 82 und der Verstellhülse 61.

Auf der Stange 82 läuft ein pneumatischer Arbeitskolben 85, der an seinem Außenumfang in das rechte freie Ende des oberen Rohres 21 druckdicht eingeschraubt ist. Zwischen der in Fig. 2B rechten Stirnseite des im oberen Rohr 21 verschiebbaren Hydraulik-Arbeitskolbens 68 und der linken Stirnseite des pneumatischen Arbeitskolbens 85 entsteht auf diese Weise ein zweiter Ölraum 86.

Da das untere Rohr 22 druckdicht auf dem oberen Rohr 21 läuft, entsteht in Fig. 2B rechts von der rechten Stirnfläche des pneumatischen Arbeitskolbens 85 ein Gasraum 87.

Wie man nun aus Fig. 2C erkennt, ist der Gasraum 87 an eine radiale Öffnung 88 im unteren Rohr 22 angeschlossen. Die Öffnung 88 führt zu der bereits erwähnten Druckluftleitung 33.

Ein Zwischenabschnitt 90 nahe dem rechten freien Ende des unteren Rohres 22 ist mit einem Außengewinde 91 versehen. Das freie Ende 92 des unteren Rohres 22 rechts vom Zwischenabschnitt 90 in Fig. 2C ist zum Beispiel mittels eines Gewindes (nicht dargestellt) starr mit einem unteren Kopfteil 95 verbunden. In das untere Kopfteil 95 ist ferner das rechte freie Ende der Stange 82 mittels eines entsprechenden Gewindezapfens 96 eingeschraubt, wozu eine Bohrung 97 im unteren Kopfteil 95 vorgesehen ist. In die Bohrung 97 ist ferner ein Zapfen des Befestigungsflansches 15 zu Zentrierzwecken eingesteckt. Der Befestigungsflansch 15 ist im übrigen an die in Fig. 2C rechte Stirnfläche des unteren Kopfteiles 95 angeschweißt. Der Befestigungsflansch 15 kann aber auch einstückig mit dem Kopfteil 95 ausgeführt werden.

Im Bereich des Zwischenabschnittes 90 läuft im unteren Rohr 22 ein pneumatischer Einstellkolben 100. Der Einstellkolben 100 ist mittels radialer Stifte 101 verschiebbar. Die Stifte 101 durchsetzen Langlöcher 102 bzw. Schlitze im Zwischenabschnitt 90 des unteren Rohres 22. Die Stifte 101 greifen dann mit ihren äußeren Enden in eine Ringnut 103 in den zweiten Einstellmitteln 26, die im dargestellten Ausführungsbeispiel als Überwurfmutter ausgebildet sind.

Das in Fig. 2C rechte, hintere Ende 104 der Überwurfmutter 26 läuft auf dem freien Ende 92 des unteren Rohres 22. Das gegenüberliegende vordere Ende 105 der Überwurfmutter 26 ist hingegen mit einem Innengewinde versehen, das auf dem Außengewinde 91 des Zwischenabschnittes 90 läuft. Das vordere Ende 105 ist ferner mittels einer Schutzkappe 107 aus Kunststoff überdeckt, die im übrigen an dem in Fig. 2C linken Ende fest mit dem unteren Rohr 22 verbunden ist.

Es versteht sich, daß die Darstellung der Figuren 2A bis 2C nur schematisch zu verstehen ist. Im vorliegenden Zusammenhang nicht interessierende Einzelelemente, insbesondere Dichtungen, Führungen, Verschraubungen und dergleichen sind der Übersichtlichkeit halber fortgelassen worden.

Die Wirkungsweise des Federbeins 20 gemäß den Figuren 2A bis 2C ist wie folgt:
Beim Einfedern eines hydropneumatischen Federbeins überlagern sich die Phänomene der hydraulischen Dämpfung und der pneumatischen Federung. Bei Federbeinen von Fahrzeugen soll das Einfedern verhältnismäßig schnell vonstatten gehen. Beim Überfahren von Bodenwellen soll nämlich ein hydropneumatisches Federbein schnell einfedern, so daß das Überfahren der Bodenwelle für den Fahrer nicht oder nur kaum bemerkbar wird.

Demgegenüber soll ein hydropneumatisches Federbein nur langsam ausfedern. Dies wirkt sich beim Überfahren von Schlaglöchern vorteilhaft aus, weil das Ausfedern verzögert wird, so daß das gefederte Rad etwa in derselben Höhe verbleibt und ohne Rückwirkung auf den Fahrer am gegenüberliegenden Ende des Schlagloches wieder aufsetzt.

Insgesamt ergibt sich bei einem hydropneumatischen Federbein durch das schnelle Einfedern und das verzögerte Ausfedern eine verbesserte Bodenhaftung und damit eine Verbesserung des Fahrkomforts.

In der Darstellung der Figuren 2A bis 2C ist das Federbein 20 vollständig ausgefedert. Damit ist das obere Rohr 21 in seiner maximalen Endstellung nach oben aus dem unteren Rohr 22 herausgefahren. Demzufolge befindet sich der pneumatische Arbeitskolben 85 über dem Andruckring 80 in Anlage an dem hydraulischen Arbeitskolben 68. Dies wiederum hat zur Folge, daß der in Fig. 2B linke, erste Ölraum 41 maximales Volumen und der in Fig. 2B rechte, zweite Ölraum 86 minimales Volumen hat. Auch der Gasraum 87 hat in dieser ausgefederten Stellung maximales Volumen.

Betrachtet man nun das in Fig. 2C rechte, untere Ende des Federbeines 20 als raumfest und bewegt man das in Fig. 2A linke Ende für einen Einfedervorgang nach rechts, so ereignet sich folgendes:

Beim Einschieben des oberen Rohres 21 in das untere Rohr 22 wandert der am freien Ende des oberen Rohres 21 fest angeordnete pneumatische Arbeitskolben 85 nach rechts.

Dadurch wird einerseits der Gasraum 87 verkleinert, weil der Einstellkolben 100 sich zum Beispiel in der in Fig. 2 eingezeichneten rechten Endstellung befindet und dort auf dem unteren Kopfteil 95 aufliegt. Durch die Verminderung des Gasraumes 87 entsteht ein pneumatischer Einfedereffekt.

Andererseits wird durch den nach rechts wandernden pneumatischen Arbeitskolben 85 der zweite Ölraum 86 vergrößert und zugleich der erste Ölraum 41 verkleinert, da auch das obere Kopfteil 36 mit seiner in Fig. 2A rechten Stirnfläche auf der Verstellhülse 61 und in dem oberen Rohr 21 nach rechts wandert.

Aufgrund dieser gegenläufigen Veränderung der Volumina in den Ölräumen 41, 86 wird das Öl in Fig. 2B von links nach rechts verdrängt, und zwar durch die ersten, weiten Kanäle 73 im hydraulischen Arbeitskolben 68 hindurch. Der Querschnitt der ersten Kanäle 73 ist dabei auf der linken Seite freigegeben, wenn man voraussetzt, daß sich die Steuerscheibe 65 in einer der in den Figuren 3 und 4 eingezeichneten Stellungen befindet. Am rechten Ende der ersten Kanäle 73 hebt das Plattenventil 79 nach rechts ab und läßt den Ölstrom durchtreten.

Die Einfederbewegung setzt sich solange fort, bis das elastische Anschlagventil 50 auf das freie Ende 60 der Verstellhülse 61 auftrifft.

Beim anschließenden Ausfedern sei angenommen, daß die von links auf das Federbein 20 wirkende Kraft wieder nachläßt. Das Gas im Gasraum 87 wird nun wieder expandieren und den pneumatischen Arbeitskolben 85 in Fig. 2B nach links verschieben.

Infolgedessen wird das Öl wieder aus dem zweiten Ölraum 86 in den ersten Ölraum 41 zurück verdrängt. Das Plattenventil 79 verschließt jedoch in seiner Funktion als Rückschlagventil die weiten Kanäle 73 in dieser Strömungsrichtung von rechts nach links in Fig. 2B. Das Öl muß daher über die engen Kanäle 74 vom zweiten Ölraum 86 in den ersten Ölraum 41 strömen. Die zweiten Kanäle 74 wirken damit als Drossel.

Aufgrund dessen wird die Ausfederbewegung des Federbeins 20 gedämpft, weil das Öl nur durch den engen Querschnitt der zweiten Kanäle 74 in den ersten Ölraum 41 verdrängt werden kann.

Insoweit ist die Funktionsweise des Federbeins von herkömmlicher Art.

Das Federbein 20 verfügt nun über drei unterschiedliche Einstellmöglichkeiten:

Die erste Einstellmöglichkeit besteht darin, daß über den Drehknopf 25 das Unrundprofil 59 verdreht wird. Da das Unrundprofil 59 formschlüssig im freien Ende 60 der Verstellhülse 61 läuft, wird die Verstellhülse 61 mitgedreht. Da die Verstellhülse 61 ihrerseits drehstarr mit der Steuerscheibe 65 verbunden ist, dreht sich die Steuerscheibe 65 synchron mit der Verdrehung des Drehknopfes 25.

Andererseits ist der hydraulische Arbeitskolben 68 drehfest arretiert, und zwar über den Gewindeabschnitt 83 der Stange 82, die an ihrem rechten Ende in Fig. 2C undrehbar mittels des Stiftes 94 verstiftet ist.

Aufgrund dessen kann man durch Verdrehen des Drehknopfes 25 die Steuerscheibe 65 relativ zum hydraulischen Arbeitskolben 68 verdrehen, wie dies in Fig. 3 und 4 mit dem Verdrehwinkel $\alpha$ angedeutet ist.

Es bedarf keiner näheren Erläuterung, daß bei einer Verdrehung der Steuerscheibe 65 die engen Kanäle 74 mehr oder weniger freigebbar sind. Demzufolge läßt sich damit der Drosselquerschnitt und damit die Dämpfungskonstante von außen einstellen.

Die zweite Einstellmöglichkeit ergibt sich über die zweiten Einstellmittel 26, d.h. die Überwurfmutter am rechten Ende des Federbeins 20 in Fig. 2C.

Wenn die Überwurfmutter 26 verdreht wird, läuft sie auf dem Außengewinde 91 in Fig. 2C nach links. Die radial äußeren Enden der Stifte 101 laufen dann in Umfangsrichtung durch die Ringnut 103. Sie bleiben jedoch in der in Fig. 2C eingezeichneten Stellung, d.h. in der Zeichenebene, weil sie durch die Langlöcher oder Schlitze 102 am Auswandern in Umfangsrichtung gehindert sind. Die Stifte 101 werden somit in Fig. 2C von rechts nach links verschoben. Sie nehmen auf diesem Weg den Einstellkolben 100 mit, wie in Fig. 2C mit dem Symbol $\Delta s$ angedeutet ist.

Auf diese Weise wird also effektiv das Volumen des Gasraums 87 vermindert.

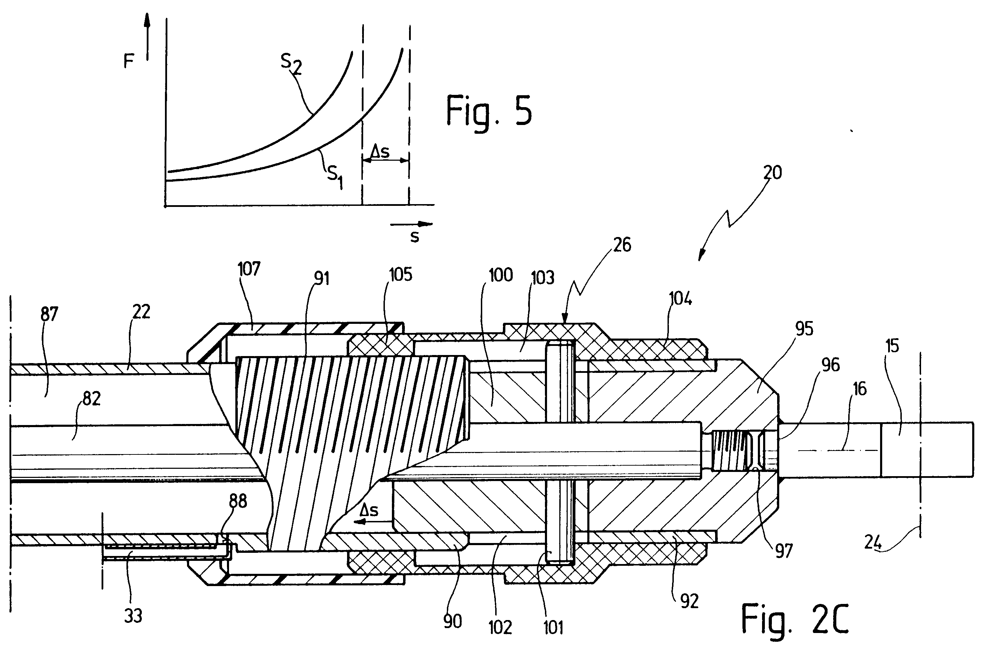

Fig. 5 zeigt die Auswirkung dieser Maßnahme.

Dort ist als Diagramm die Federkraft F über dem Weg s aufgetragen, den der pneumatische Arbeitskolben 85 beim Einfedern durchmißt. Mit $s_1$ ist die Federkennlinie $F = f(s)$ für den in Fig. 2A bis 2C eingezeichneten Fall aufgetragen, bei dem sich der Einstellkolben 100 in der rechten Endstellung befindet. Die Federkennlinie verläuft in diesem Fall in der bekannter hyperbolischen Art und Weise, d.h. zunächst leicht progressiv und später ansteigend progressiv, bis sie sich schließlich asymptotisch dem Endanschlag nähert.

Wird nun der Einstellkolben 100 um einen Betrag $\Delta s$ verschoben, so verschiebt sich damit die Kennlinie $s_1$ in Fig. 5 nach links, mit $s_2$ angedeutet. Einer Verschiebung des Einstellkolbens 100 steht es nämlich gleich, daß sich der pneumatische Arbeitskolben 85 um einen entsprechenden Betrag nach rechts bewegt hätte.

Bezogen auf denselben Nullpunkt der Größe s kann man also durch Verstellen des Einstellkolbens 100 die Federkennlinie im Anfang in ihrem Ausgangswert verändert und auch die Progressivität einstellen.

Schließlich ergibt sich eine dritte Einstellmöglichkeit noch dadurch, daß der Drehknopf 25 außer der Verdrehung des Unrundprofils 59 auch eine Verdrehung der Spindel bewirkt, die aus der Gewindehülse 51 und dem Gewindebolzen 56 gebildet wird.

Wenn die ersten Einstellmittel 25 verdreht werden, wandert die in Umfangsrichtung fixierte Gewindehülse 51 axial nach rechts und schiebt dabei das elastische Anschlagteil 50 vor sich her. Auf diese Weise wird der Abstand zwischen den elastischen Anschlagteil 50 und dem freien Ende 60 der Verstellhülse 61 vermindert. Dieser Abstand entspricht jedoch dem maximalen Arbeitsspiel des Federbeins 20.

Das für die Funktion des Federbeins 20 erforderliche Öl wird, wie bereits erwähnt, über den Ölanschluß 42 zugeführt. Die erforderliche Druckluft hingegen wird an einem Anschlußstutzen zugeführt, der zum Beispiel mit einer Fahrradpumpe versorgt werden kann. Von dort strömt die Druckluft über die Druckluftleitungen 33 und die Öffnungen 88 in den Gasraum 87 (Fig. 2C). Der Luftdruck kann am Manometer 32 bzw. an zwei derartigen Manometern, jeweils für eine Vorderradgabel und eine Hinterradgabel, abgelesen werden.

Der Luftdruck wird bei niedrigem Körpergewicht des Fahrers niedrig und bei hohem Körpergewicht hoch eingestellt. Da die Druckluftleitung 33 beide Gasräume 87 der Gabel 10 miteinander verbindet, herrscht in beiden Federbeinen 20, 20' derselbe Arbeitsdruck des Gases.

**Patentansprüche**

1. Hydropneumatisches Federbein mit einer ersten, hydraulischen Baugruppe, in der ein Hydraulikmedium bei einem Arbeitsspiel des Federbeins (20) zwischen einem ersten Raum (41) und einem zweiten Raum (86) in Abhängigkeit von einer Dämpfungskonstante der ersten Baugruppe verdrängt wird, und mit einer zweiten, pneumatischen Baugruppe, in der ein unter einem vorgegebenen Arbeitsdruck stehendes Gas bei einem Arbeitsspiel des Federbeins (20) in einem dritten Raum (87) in Abhängigkeit von einer Federkonstante der zweiten Baugruppe komprimiert bzw. entspannt wird, dadurch gekennzeichnet, daß am Federbein (20) manuell betätigbare Einstellmittel (25, 26) zum Verändern mindestens einer der Konstanten vorgesehen sind.

2. Federbein nach Anspruch 1, gekennzeichnet durch seine Verwendung in einem Fahrrad.

3. Federbein nach Anspruch 2, gekennzeichnet durch seine Verwendung in einer Gabel (10) eines Fahrrades.

4. Federbein nach einem oder mehreren der Ansprüche 1 bis 3, dadurch gekennzeichnet, daß die Einstellmittel (25, 26) um eine Längsachse (16) verdrehbar sind.

5. Federbein nach einem oder mehreren der Ansprüche 1 bis 4, dadurch gekennzeichnet, daß die Einstellmittel (25, 26) sich an einem axialen Ende des Federbeins (20) befinden.

6. Federbein nach einem oder mehreren der Ansprüche 1 bis 5, dadurch gekennzeichnet, daß die Einstellmittel (25) zum Verändern der Dämpfungskonstante eine einstellbare Drossel (74, 76) betätigen.

7. Federbein nach Anspruch 6, dadurch gekennzeichnet, daß die Drossel (74, 76) Kanäle (74) in einem zwischen dem ersten Raum (41) und dem zweiten Raum (86) angeordneten Hydraulik-Arbeitskolben (68) umfaßt, die mittels einer Blende (76) überdeckbar sind.

8. Federbein nach Anspruch 7, dadurch gekennzeichnet, daß die Blende (76) axial fest auf dem Hydraulik-Arbeitskolben (68) angeordnet und mittels eines axialen, drehstarren und teleskopartig ausgebildeten Gestänges (59, 61) betätigbar ist.

9. Federbein nach einem oder mehreren der Ansprüche 1 bis 8, dadurch gekennzeichnet, daß die Einstellmittel (25) zum Verändern der Dämpfungskonstante vorzugsweise zugleich einen Endanschlag (50) zum Begrenzen des Hubes eines zwischen dem ersten Raum (41) und dem zweiten Raum (86) angeordneten Hydraulik-Arbeitskolbens (68) betätigen.

10. Federbein nach Anspruch 8 und 9, dadurch gekennzeichnet, daß der Endanschlag (50) mittels einer vom Gestänge (59, 61) verdrehbaren Spindel (51, 56) verstellbar ist.

11. Federbein nach einem oder mehreren der Ansprüche 1 bis 10, dadurch gekennzeichnet, daß die Einstellmittel (26) zum Verändern der Federkonstante einen den dritten Raum (87) einseitig begrenzenden, einstellbaren Kolben (100) betätigen.

12. Federbein nach Anspruch 11, dadurch gekennzeichnet, daß die Einstellmittel (26) zum Verändern der Federkonstante eine Überwurfmutter umfassen, die auf einem den dritten Raum (87) umschließenden Rohr (22) läuft und mit einer radialen Mitnahme (101) für den einstellbaren Kolben (100) versehen ist.

13. Federbein nach einem oder mehreren der Ansprüche 1 bis 12, gekennzeichnet durch:

    - ein oberes Kopfteil (36);
    - ein an einem freien Ende mit dem oberen Kopfteil (36) starr verbundenes Innenrohr (21);

- einen das andere freie Ende des Innenrohres (21) abschließenden pneumatischen Arbeitskolben (85);
- ein unteres Kopfteil (95);
- ein an einem freien Ende (92) mit dem unteren Kopfteil (95) starr verbundenes Außenrohr (22), dessen anderes freies Ende druckdicht auf dem anderen freien Ende des Innenrohres (21) läuft;
- eine starr mit dem unteren Kopfteil (95) verbundene erste Stange (82), wobei die erste Stange (82) das äußere Rohr (22) axial durchsetzt und mit seinem freien Ende den pneumatischen Arbeitskolben (85) axial durchdringt; und
- einen hydraulischen Arbeitskolben (68), der am freien Ende der ersten Stange (82) starr befestigt ist, wobei der hydraulische Arbeitskolben (68) mindestens einen weiten axialen Kanal (73), mindestens einen engen axialen Kanal (74) sowie Rückschlagventilmittel (65, 79) für mindestens einen der Kanäle (73, 74) umfaßt.

14. Federbein nach Anspruch 13, gekennzeichnet durch:

- einen auf der Stange (82) zwischen dem unteren Kopfteil (95) und dem pneumatischen Arbeitskolben (85) geführten Einstellkolben (100), der druckdicht im Außenrohr (22) läuft; und
- eine auf einem Außengewinde (91) des Außenrohres (22) laufende Überwurfmutter (26), die über eine radiale Mitnahme (101) mit dem Einstellkolben (100) verbunden ist.

15. Federbein nach Anspruch 13 oder 14, gekennzeichnet durch:

- eine mit dem hydraulischen Arbeitskolben (68) axial fest, jedoch drehbar verbundene Steuerscheibe (65) mit einem Blendenabschnitt (76) zum variablen Überdecken mindestens eines der Kanäle (73, 74) in Abhängigkeit vom Verdrehwinkel ($\alpha$) der Steuerscheibe (65); und
- eine mit der Steuerscheibe (65) drehstarr verbundene zweite Stange, die drehstarr, jedoch axial verschiebbar mit einem Einstellmittel (25) am oberen Kopfteil (36) verbunden ist.

16. Federbein nach Anspruch 15, gekennzeichnet durch:

- ein mit dem Einstellmittel (25) am oberen Kopfteil (36) verbundenes Unrundprofil (59), das mit seinem freien Ende in ein komplementär ausgebildetes Gegenprofil (62) der als Verstellhülse (61) ausgebildeten zweiten Stange eingreift; und

- eine druckdichte Durchführung (57) zwischen dem Einstellmittel (25) am oberen Kopfteil (36) und dem Unrundprofil (59).

17. Federbein nach einem oder mehreren der Ansprüche 13 bis 16, gekennzeichnet durch:

- ein mit dem Einstellmittel (25) am oberen Kopfteil (36) verbundenes Anschlagteil (50) für eine starre Verlängerung der ersten Stange (82); und
- eine über das Einstellmittel (25) am oberen Kopfteil (36) betätigbare Spindel (51, 56) zum axialen Verstellen des Anschlagteiles (50).

18. Federbein nach einem oder mehreren der Ansprüche 1 bis 17, dadurch gekennzeichnet, daß Mittel zum Einstellen des Arbeitsdrucks des Gases vorgesehen sind.

19. Federbein nach Anspruch 18, dadurch gekennzeichnet, daß die Mittel einen Anschluß für eine Fahrrad-Luftpumpe umfassen.

20. Federbein nach einem oder mehreren der Ansprüche 1 bis 19, dadurch gekennzeichnet, daß bei einer Verwendung zweier Federbeine (20, 20') in einer Fahrradgabel (10) die dritten Räume (87) der Federbeine (20, 20') mittels einer Druckluftleitung (33) miteinander verbunden sind.

21. Federbein nach einem oder mehreren der Ansprüche 1 bis 20, dadurch gekennzeichnet, daß ein Manometer (32) an den dritten Raum (87) angeschlossen ist.

22. Federbein nach einem oder mehreren der Ansprüche 1 bis 20, dadurch gekennzeichnet, daß bei einer Verwendung des Federbeins jeweils in einer Vorderrad- und einer Hinterradgabel jeweils ein Manometer für jede Gabel vorgesehen ist.

Fig. 1

Fig. 2A

Fig. 3

Fig. 4

Fig. 2B

EP 0 723 090 A2

Fig. 5

Fig. 2C